# EUROPEAN PATENT APPLICATION

(11) **EP 4 567 420 A1**
(43) Date of publication of application: **11.06.2025**
(21) Application number: 23849970.1
(22) Date of filing: 26.07.2023
(51) Int. Cl.: G01N 30/02, G01N 30/06, G01N 30/88

(54) **RECOVERY SOLUTION GENERATING DEVICE FOR COMBUSTION ION CHROMATOGRAPH**

(30) Priority: 03.08.2022 JP 2022123733
(71) Applicant: Shimadzu Corporation, Kyoto-shi Kyoto 604-8511 (JP)
(72) Inventor: IKEZAWA Yoshio, Kyoto-shi, Kyoto 604-8511 (JP)
(74) Representative: Müller-Boré & Partner Patentanwälte PartG mbB
(86) International application number: PCT/JP2023/027319
(87) International publication number: WO 2024/029415

(57) **Abstract**

There are provided a combustion tube (16) for generating a component to be recovered by combusting a sample; a carrier gas supply part (23) configured to supply a carrier gas to the combustion tube (16) so as to cause the component to be recovered generated in the combustion tube (16) to flow out from an outlet of the combustion tube (16) by the carrier gas; an absorption part (6) including a plurality of absorption tubes (30), and an absorption tube selection valve (34) for selecting one absorption tube (30) to be fluidly connected to the outlet of the combustion tube (16) from among the plurality of absorption tubes; and a controller (36) configured to control an operation of the absorption part (6) such that the component to be recovered generated from the sample introduced into the combustion tube (16) is recovered in a predetermined absorption tube (30).

## Description

### TECHNICAL FIELD

The present invention relates to a recovery solution generating device for generating a recovery solution in a combustion ion chromatograph.

### BACKGROUND ART

It is known to use combustion ion chromatography analysis to analyze total organic fluorine (TOF) (see Non Patent Document 1). In order to perform combustion ion chromatography analysis, an analysis system including at least a combustion part, an absorption part, and a detection part (ion chromatograph) is constructed. In such an analysis system, when a sample is introduced into a combustion tube in the combustion part, an organofluorine compound contained in the sample is converted into hydrogen fluoride, the converted hydrogen fluoride is sent to an absorption tube provided in the absorption part by a carrier gas passing through the combustion tube, the hydrogen fluoride is absorbed by an absorbent in the absorption tube, and a recovery solution is generated. In the present application, the absorbent after which a component to be recovered such as hydrogen fluoride is recovered is referred to as a "recovery solution". At this time, in a case where the sample is liquid, the sample is once gasified by combustion in the combustion tube, but is cooled and condensed in the absorbent, and returns to liquid. Thereafter, the recovery solution in the absorption tube is injected into the ion chromatograph and the fluoride ion F⁻ concentration is measured, and thus the organofluorine compound concentration in the sample is measured.

### PRIOR ART DOCUMENT

### NON PATENT DOCUMENT

Non Patent Document 1: "Investigation of Contamination Distribution of Unknown Organofluorine Compounds Using All-Organic Halogen Analysis Technique", Yuji Suzuki, Graduate School of Global Environment Studies, Kyoto University www.byq.or.jp/josei/h28/accomplishment_report/18_report_suz uki.pdf

### SUMMARY OF THE INVENTION

### PROBLEMS TO BE SOLVED BY THE INVENTION

In a case where a plurality of samples is analyzed using combustion ion chromatography analysis, it is necessary to wash an absorption tube and fill the absorption tube with a new absorbent after injecting a recovery solution into an ion chromatograph but before introducing the next sample into the combustion tube. If the washing of the absorption tube at this time is insufficient, there is a possibility that fluorine remaining in the absorption tube causes contamination with respect to the recovery solution generated from the next sample. In particular, in a case where the sample contains the organofluorine compound at a very low concentration, the analysis accuracy may be greatly reduced due to the influence of such contamination.

The present invention has been made in view of the above problems, and an object of the present invention is to provide a recovery solution generating device in which contamination is less likely to occur in a case where a plurality of samples is analyzed using combustion ion chromatography analysis.

### SOLUTIONS TO THE PROBLEMS

A recovery solution generating device for a combustion ion chromatograph according to the present invention includes: a combustion tube for generating a component to be recovered by combusting a sample; a carrier gas supply part configured to supply a carrier gas to the combustion tube so as to cause the component to be recovered generated in the combustion tube to flow out from an outlet of the combustion tube by the carrier gas; an absorption part including a plurality of absorption tubes each containing an absorbent for recovering the component to be recovered by absorbing the component to be recovered, and an absorption tube selection valve for selecting one absorption tube to be fluidly connected to the outlet of the combustion tube from among the plurality of absorption tubes; and a controller configured to control an operation of the absorption part such that the component to be recovered generated from the sample introduced into the combustion tube is recovered in a predetermined absorption tube among the plurality of absorption tubes.

### EFFECTS OF THE INVENTION

In a sample generating device according to the present invention, an absorption part includes a plurality of absorption tubes each containing an absorbent for absorbing a component to be recovered and an absorption tube selection valve for selecting one absorption tube to be fluidly connected to an outlet of a combustion tube from among the plurality of absorption tubes, and a controller controls an operation of the absorption part such that the component to be recovered generated from the sample supplied to the combustion tube is recovered by a predetermined absorption tube. Therefore, it is not necessary to repeatedly wash and use the same absorption tube when analyzing the plurality of samples by combustion ion chromatography analysis. As a result, contamination caused by insufficient washing of the absorption tube is less likely to occur. In addition, in order to reduce the risk of contamination, a recovery solution for the same sample is prepared in a plurality of absorption tubes, and a plurality of analysis results under the same condition is obtained for the same sample, whereby an analysis result having a small influence of contamination can be obtained.

### BRIEF DESCRIPTION OF THE DRAWINGS

Fig. 1 is a schematic configuration diagram showing an embodiment of a recovery solution generating device for a combustion ion chromatograph.
Fig. 2 is a flowchart showing an example of a recovery solution generating operation in the embodiment.
Fig. 3 is a conceptual diagram showing an example of a method of moving a recovery solution from the recovery solution generating device to an ion chromatograph.
Fig. 4 is a conceptual diagram showing another example of the method of moving the recovery solution from the recovery solution generating device to the ion chromatograph.

### EMBODIMENT OF THE INVENTION

Hereinafter, an embodiment of a recovery solution generating device for a combustion ion chromatograph according to the present invention will be described with reference to the drawings.

In this embodiment, a case where the concentration of the organic fluorine compound contained in a sample is analyzed using combustion ion chromatography analysis will be described as an example. Examples of the sample in this case include tap water, river water, lake water, and industrial wastewater. Note that the present invention is not limited thereto, and includes a case where an organic chlorine compound or the like in a sample is analyzed using combustion ion chromatography analysis. A component to be recovered, which is recovered by an absorbent, varies depending on the compound to be analyzed.

A recovery solution generating device 1 mainly includes a sample part 2, a combustion part 4, and an absorption part 6.

In the sample part 2, a plurality of sample containers 8 containing the sample is set at predetermined positions in a state of being mounted on a sample rack 10. The sample part 2 is provided with a sample selection valve 12. The sample selection valve 12 is a multi-port valve that includes a common port provided at the center and a plurality of selection ports concentrically surrounding the common port, and selectively switches the selection port to be in fluid communication with the common port. A channel 14 leading to one of the selection ports of the multi-port valve of the combustion part 4 described later is fluidly connected to the common port of the sample selection valve 12, and a channel leading to each of the sample containers is fluidly connected to the corresponding selection port. By switching the sample selection valve 12, a sample to be sent to the combustion part 4 is selected.

The combustion part 4 includes a combustion tube 16, a heating furnace 18, a syringe pump 20, a multi-port valve 22, and a carrier gas supply part 23. The multi-port valve 22 is for selectively switching the connection destination of the syringe pump 20, and includes a common port provided at the center and a plurality of selection ports concentrically surrounding the common port, similarly to the sample selection valve 12. The syringe pump 20 is fluidly connected to the common port of the multi-port valve 22, and at least a channel leading to a container containing a washing solution, a channel leading to a container containing an absorbent, a channel leading to a drain, and a channel leading to the combustion tube 16 are fluidly connected to each of the selection ports.

The combustion tube 16 is heated by the heating furnace 18. The combustion tube 16 is for combusting a sample to convert an organofluorine compound in the sample into hydrogen fluoride to be absorbed by the absorbent described later. An outlet of the combustion tube 16 is connected to one port of a three-way solenoid valve 26 via a channel 24. The three-way solenoid valve 26 is interposed between the combustion part 4 and the absorption part 6, and is a switching valve for selectively switching the connection destination of the outlet of the combustion tube 18 between the absorption part 6 and the drain. The carrier gas supply part 23 is fluidly connected to the vicinity of an inlet of the combustion tube 16, and the carrier gas is supplied to the combustion tube 16.

The absorption part 6 includes a plurality of absorption tubes 30 and an absorption tube selection valve 34. The plurality of absorption tubes 30 is set at predetermined positions in a state of being mounted on a dedicated absorption tube rack 32. Each of the plurality of absorption tubes 30 contains an absorbent for absorbing hydrogen fluoride generated in the combustion tube 16. Examples of the absorbent include an aqueous solution containing ultrapure water, KH₂PO₄, H₂O₂, or the like. The absorption tube selection valve 34 is for selectively switching the absorption tube 30 fluidly connected to the outlet of the combustion tube 16. Similarly to the sample selection valve 12, the absorption tube selection valve 34 is a multi-port valve including a common port provided at the center and a plurality of selection ports concentrically surrounding the common port. The common port of the absorption tube selection valve 34 is fluidly connected to one port of the multi-port valve 26 via a channel 28. One of the selection ports of the absorption tube selection valve 34 leads to the drain and the remaining selection ports lead to the respective absorption tubes 30.

The operations of the sample part 2, the combustion part 4, the absorption part 6, and the three-way solenoid valve 26 are controlled by a controller 36. The controller 36 is a part of functions of a computer device including a data storage device that includes a storage area for storing data including a program, and a central processing part (CPU) for executing the program stored in the data storage device.

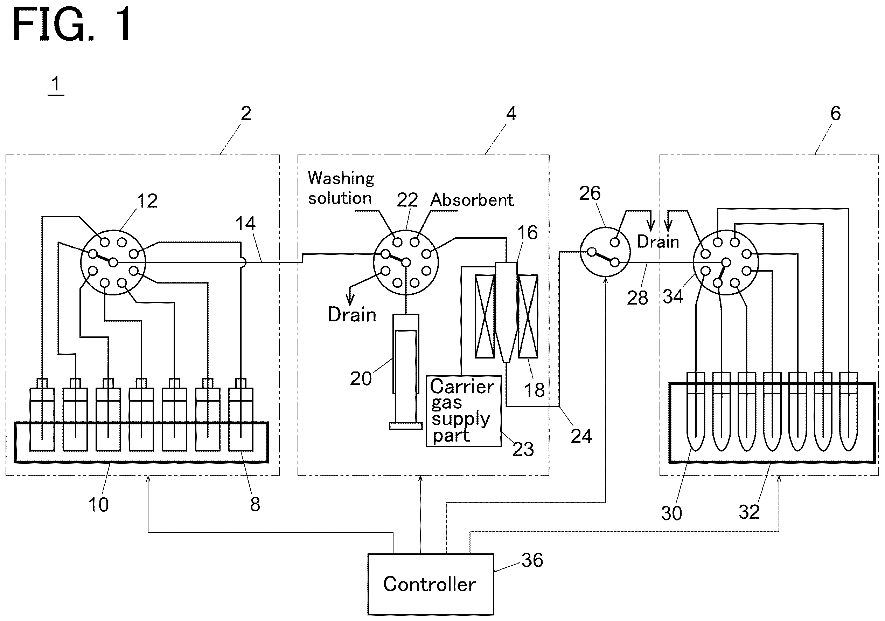

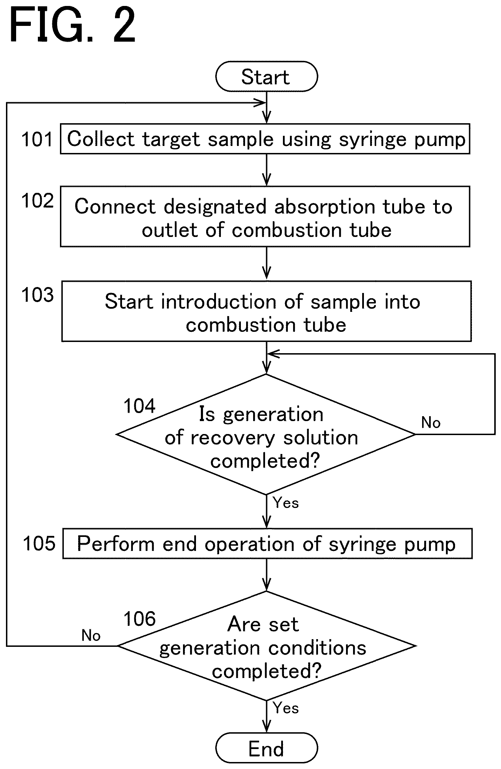

Next, an example of the operation of the sample generating device 1 realized by the controller 36 will be described with reference to the flowchart of Fig. 2 together with Fig. 1.

As a premise, a user sets, for the controller 36, generation conditions of the recovery solution such as, after setting the sample containers 8 containing the sample from which the recovery solution is to be generated at predetermined positions, in what order the set samples are introduced into the combustion part 6 and which absorption tube 30 collects hydrogen fluoride derived from the respective samples generated in the combustion part 6. Note that the generation conditions can also be set such that the sample contained in the same sample container 8 is introduced into the combustion tube 16 a plurality of times, and hydrogen fluoride derived from the same sample is recovered in different absorption tubes 30 to generate a plurality of recovery solutions derived from the same sample. Therefore, at least one sample container 8 is required to be set in the sample part 2.

When the setting of the generation conditions is completed and the user inputs an instruction to start sample preparation to the controller 36, the controller 36 first switches the sample selection valve 12 and the multi-port valve 22 such that the sample container 8 containing the sample to be introduced into the combustion part 6 is fluidly connected to the syringe pump 20, and causes the syringe pump 20 to perform a suction operation to collect the target sample into the syringe pump 20 (step 101).

Thereafter, the controller 36 switches the multi-port valve 22, the three-way solenoid valve 26, and the absorption tube selection valve 34 such that the absorption tube 30 set for the target sample is fluidly connected to the downstream of the syringe pump 20 via the combustion tube 16, the channel 24, the channel 28, and the absorption tube selection valve 34 (step 102). Thereafter, introduction of the sample from the syringe pump 20 into the combustion tube 16 is started (step 103). The organic fluorine in the sample introduced into the combustion tube 16 is converted into hydrogen fluoride. The gas containing hydrogen fluoride generated inside the combustion tube 16 is guided to the predetermined absorption tube 30 together with the condensed water by the carrier gas supplied from the carrier gas supply part 23 and is recovered. When a predetermined amount of the sample out of the sample sucked into the syringe pump 20 is introduced into the combustion tube 16 and all the gas generated by the combustion of the sample is guided to the absorption tube 30, the generation of the recovery solution from the sample is completed (step 104) . The recovery solution in which hydrogen fluoride as a component to be recovered is recovered is generated inside the absorption tube 30. Whether the generation of the recovery solution has been completed can be determined by, for example, whether a predetermined time has elapsed since the introduction of the predetermined amount of the sample from the syringe pump 20 into the combustion tube 16 was completed.

After the generation of the recovery solution is completed, the controller 36 performs an end operation of the syringe pump 20, such as discharging the sample remaining in the syringe pump 20 to the drain (step 105). If there is a next sample from which a recovery solution is to be generated, the next sample is sucked into the syringe pump 20 and discharged to the drain, so that washing of the inside of the syringe pump 20 can also be performed. The controller 36 repeatedly executes the operation of steps 101 to 105 described above for all the samples set as the analysis target (step 106).

Note that, while the absorption tube selection valve 34 is rotating to select the predetermined absorption tube 30, the controller 36 can switch the three-way solenoid valve 26 to a state in which the outlet of the combustion tube 16 is connected to the drain so that the carrier gas flowing out from the combustion tube 16 is not guided to another absorption tube 30. As a result, even when a substance that affects analysis remains in the channel downstream of the combustion tube 16, it is possible to prevent such a substance from being recovered by the absorption tube 30 that is not a target, and it is possible to suppress the occurrence of contamination.

In addition, since the three-way solenoid valve 26 is not an essential component, the channel 24 on the outlet side of the combustion tube 16 may be directly fluidly connected to the common port of the absorption tube selection valve 34. In this case, the occurrence of contamination can also be suppressed by stopping the supply of the carrier gas from the carrier gas supply part 23 while the absorption tube selection valve 34 is rotating to select the predetermined absorption tube 30.

Furthermore, in this embodiment, one selection port of the absorption tube selection valve 34 is used as a port leading to the drain so that purging can be performed in the channel 28 downstream of the three-way solenoid valve 26 and in a rotor groove in the absorption tube selection valve 34. However, this is not an essential configuration, and all the selection ports of the absorption tube selection valve 34 may be fluidly connected to the respective absorption tubes 30.

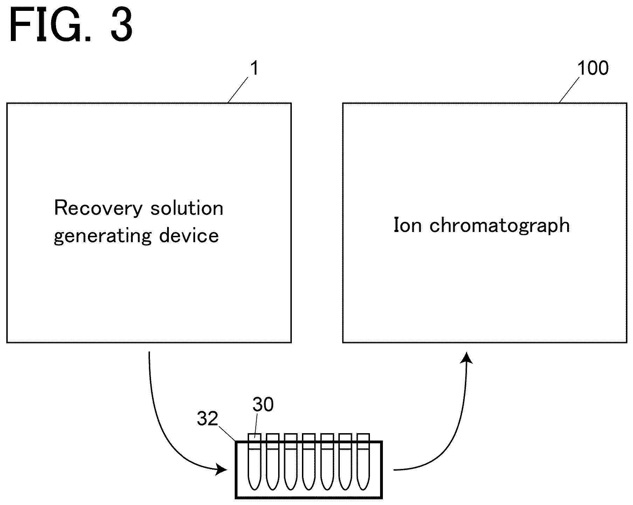

Note that the absorption tube rack 32 of the absorption part 6 is preferably detachably set to the absorption part 6. Since the absorption tube rack 32 is attachable to and detachable from the absorption part 6, after the recovery solution is generated in all of the absorption tubes 30, all of the absorption tubes 30 can be moved together with the absorption tube rack 32 to the vicinity of an ion chromatograph 100 and the recovery solution can be transferred to the sample vial for the ion chromatograph 100 as shown in Fig. 3. Therefore, the work load of setting the plurality of absorption tubes 30 to the ion chromatograph 100 is reduced.

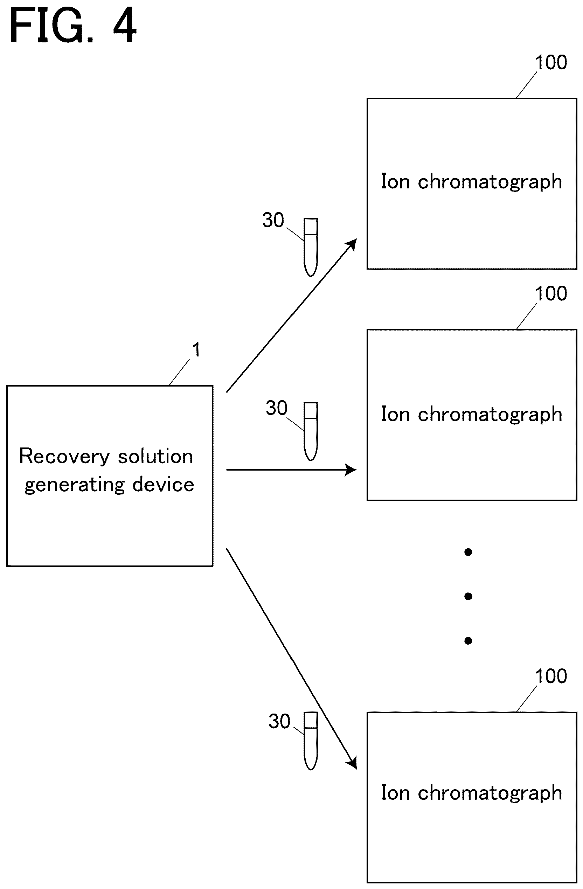

In addition, as shown in Fig. 4, the plurality of absorption tubes 30 each containing the recovery solution generated by the recovery solution generating device 1 can be transferred to sample vials of different ion chromatographs 100 to simultaneously perform analysis on a plurality of samples in parallel. As a result, the analysis efficiency of the plurality of samples can be improved.

The embodiment described above is merely an example of an embodiment of the recovery solution generating device according to the present invention. The embodiment of the recovery solution generating device according to the present invention is as follows.

An embodiment of a recovery solution generating device according to the present invention includes: a combustion tube for generating a component to be recovered by combusting a sample; a carrier gas supply part configured to supply a carrier gas to the combustion tube so as to cause the component to be recovered generated in the combustion tube to flow out from an outlet of the combustion tube by the carrier gas; an absorption part including a plurality of absorption tubes each containing an absorbent for recovering the component to be recovered by absorbing the component to be recovered, and an absorption tube selection valve for selecting one absorption tube to be fluidly connected to the outlet of the combustion tube from among the plurality of absorption tubes; and a controller configured to control an operation of the absorption part such that the component to be recovered generated from the sample introduced into the combustion tube is recovered in a predetermined absorption tube among the plurality of absorption tubes.

In an aspect [1] of the embodiment described above, the controller is configured to stop supply of the carrier gas to the combustion tube while the absorption tube selection valve is performing an operation of switching the absorption tube by controlling an operation of the carrier gas supply part. As a result, the carrier gas does not flow into another absorption tube while the absorption tube selection valve is being switched to the absorption tube to be fluidly connected next to the outlet of the combustion tube, and occurrence of contamination can be suppressed.

In addition, in an aspect [2] of the embodiment described above, the recovery solution generating device further includes a switching valve that is provided between the outlet of the combustion tube and the absorption tube selection valve of the absorption part, and is configured to selectively fluidly connect the outlet of the combustion tube to one of the absorption part and the drain, and the controller is configured to fluidly connect the outlet of the combustion tube to the drain while the absorption tube selection valve is performing an operation of switching the absorption tube by controlling the switching valve. As a result, the carrier gas does not flow into another absorption tube while the absorption tube selection valve is being switched to the absorption tube to be fluidly connected next to the outlet of the combustion tube, and occurrence of contamination can be suppressed.

In addition, in an aspect [3] of the embodiment described above, the recovery solution generating device includes a sample part including a plurality of sample containers each containing the sample, and a sample selection valve for selecting any one sample container from among the plurality of sample containers, and the recovery solution generating device is configured so that the sample in the sample container selected by the sample selection valve is collected and supplied to the combustion tube.

In the aspect [3] described above, the controller is configured to cause an absorbent in the separate absorption tubes to absorb the component to be recovered generated from the sample in each of the plurality of sample containers by linking an operation of the sample selection valve of the sample part with an operation of the absorption tube selection valve of the absorption part.

In addition, in an aspect [4] of the embodiment described above, the plurality of absorption tubes is mounted on a common rack detachably set to the absorption part.

### DESCRIPTION OF REFERENCE SIGNS

- 1:: Recovery solution generating device
- 2:: Sample part
- 4:: Combustion part
- 6:: Absorption part
- 8:: Sample container
- 10:: Sample rack
- 12:: Sample selection valve
- 14, 24, 28:: Channel
- 16:: Combustion tube
- 18:: Heating furnace
- 20:: Syringe pump
- 22:: Multi-port valve
- 26:: Three-way solenoid valve
- 30:: Absorption tube
- 32:: Absorption tube rack
- 34:: Absorption tube selection valve
- 36:: Controller

## Claims

1. A recovery solution generating device for a combustion ion chromatograph, the device comprising:
a combustion tube for generating a component to be recovered by combusting a sample;
a carrier gas supply part configured to supply a carrier gas to the combustion tube so as to cause the component to be recovered generated in the combustion tube to flow out from an outlet of the combustion tube by the carrier gas;
an absorption part including a plurality of absorption tubes each containing an absorbent for recovering the component to be recovered by absorbing the component to be recovered, and an absorption tube selection valve for selecting one absorption tube to be fluidly connected to the outlet of the combustion tube from among the plurality of absorption tubes; and
a controller configured to control an operation of the absorption part such that the component to be recovered generated from the sample introduced into the combustion tube is recovered in a predetermined absorption tube among the plurality of absorption tubes.

2. The recovery solution generating device according to claim 1, wherein the controller is configured to stop supply of the carrier gas to the combustion tube while the absorption tube selection valve is performing an operation of switching the absorption tube by controlling an operation of the carrier gas supply part.

3. The recovery solution generating device according to claim 1, further comprising a switching valve that is provided between the outlet of the combustion tube and the absorption tube selection valve of the absorption part, and is configured to selectively fluidly connect the outlet of the combustion tube to one of the absorption part and the drain,
wherein the controller is configured to fluidly connect the outlet of the combustion tube to the drain while the absorption tube selection valve is performing an operation of switching the absorption tube by controlling the switching valve.

4. The recovery solution generating device according to claim 1, further comprising a sample part including a plurality of sample containers each containing the sample, and a sample selection valve for selecting any one sample container from among the plurality of sample containers,
wherein the recovery solution generating device is configured so that the sample in the sample container selected by the sample selection valve is collected and supplied to the combustion tube.

5. The recovery solution generating device according to claim 4, wherein the controller is configured to cause an absorbent in the separate absorption tubes to absorb the component to be recovered generated from the sample in each of the plurality of sample containers by linking an operation of the sample selection valve of the sample part with an operation of the absorption tube selection valve of the absorption part.

6. The recovery solution generating device according to claim 1, wherein the plurality of absorption tubes is mounted on a common rack detachably set to the absorption part.
